# EUROPEAN PATENT SPECIFICATION

(11) **EP 2 814 198 B1**
(45) Date of publication and mention of the grant of the patent: **12.09.2018**
(21) Application number: 14172386.6
(22) Date of filing: 13.06.2014
(51) Int. Cl.: H04L 7/08, H04N 5/335

(54) **Apparatus, system, and method for n-phase data mapping**
Vorrichtung, System und Verfahren zur N-phasigen Datenabbildung
Appareil, système et procédé de mappage de données à N phases

(30) Priority: 14.06.2013 US 201361956836 P; 29.12.2013 US 201314142848; 15.07.2013 US 201361846233 P
(43) Date of publication of application: 17.12.2014
(73) Proprietor: Intel Corporation, Santa Clara, CA 95054 (US)
(72) Inventor: Peterson, Steven, Placerville, CA 95667 (US); Thanigasalam, Haran, San Jose, CA 95134 (US); Balasubrahmanyam, Sriram Sri, Folsom, CA 95630 (US)
(74) Representative: HGF Limited

(56) References cited:
- EP-A1- 1 724 753
- EP-A1- 2 360 667
- US-A- 5 280 355
- US-A1- 2012 120 289
- "DRAFT MIPI Alliance Specification for Camera Serial Interface 2 (CSI-2)" In: "DRAFT MIPI Alliance Specification for Camera Serial Interface 2 (CSI-2)", 2 April 2009 (2009-04-02), XP055165978, * pages 25-30 *

## Description

### BACKGROUND

This disclosure pertains to computing systems, and in particular (but not exclusively) to techniques for improving performance of a communications link.

US 5,280,355 relates to a television deghosting apparatus using a pseudorandom sequence detector.

EP 2 360 667 describes a display with CLK phase or data auto-adjusting mechanism and a method of providing the same.

US 2012/0120289 relates to an image outputting apparatus and method for transmitting image data efficiently.

EP 1724753 A1 relates to an image processing apparatus and method, a display apparatus and method, and an electronic apparatus in which a driver can be controlled by superposing panel setting data on an image signal.

"DRAFT MIPI Alliance Specification for Camera Serial Interface 2 (CSI-2)", 2 April 2009, defines an interface between a peripheral device (camera) and a host processor (baseband, application engine).

### BRIEF DESCRIPTION OF THE DRAWINGS

FIG. 1 is a diagram illustrating an embodiment of a block diagram for a computing system including a multicore processor.
FIG. 2 is a diagram illustrating an embodiment of a low power computing platform.
FIG. 3 is a diagram illustrating an embodiment of a low power data transmission platform. Figure 4 illustrates a mobile ecosystem using a CSI2 stack which includes a camera image sensor and a SOC device.
Figure 5 illustrates a MIPI DSI output driver according to an embodiment of the present invention.
Figure 6 illustrates further embodiments related to those of Figure 5.
Figures 7 and 8 illustrate partitioning in a circuit according to an embodiment of the present invention to support both 3-Phase and 4-Phase modes.
Figure 9 illustrates an embodiment related to MIPI 3-Phase.
Figure 10 illustrates an embodiment in a 3-Phase clock recovery circuit.
Figure 11 illustrates a timing diagram of possible data patterns generated by toggling the 3 data lines.
Figure 12 illustrates an embodiment in a 4-Phase clock recovery circuit.
Figure 13 shows 6 possible assignments from an existing state to the 3 different voltage levels in the next state.
Figure 14 shows a transition table according to an embodiment of the present invention.
Figure 15 shows an embodiment in a MIPI 4-Phase enhancement to the proposed 3-Phase definition in the MIPI technical steering group.
Figure 16 shows a transition table according to an embodiment of the present invention.
Figure 17 shows an algorithm that may include a simple decoder to map the 4 bit data pattern into the 16 different transition states.
Figure 18 is a transition table showing the recommended next states for each of the 16 states defined by the 4 data bits.

### DETAILED DESCRIPTION

In the following description, numerous specific details are set forth, such as examples of specific types of processors and system configurations, specific hardware structures, specific architectural and micro architectural details, specific register configurations, specific instruction types, specific system components, specific measurements/heights, specific processor pipeline stages and operation etcetera in order to provide a thorough understanding of the present disclosure. It will be apparent, however, to one skilled in the art that these specific details need not be employed to practice the present disclosure. In other instances, well known components or methods, such as specific and alternative processor architectures, specific logic circuits/code for described algorithms, specific firmware code, specific interconnect operation, specific logic configurations, specific manufacturing techniques and materials, specific compiler implementations, specific expression of algorithms in code, specific power down and gating techniques/logic and other specific operational details of computer system haven't been described in detail in order to avoid unnecessarily obscuring the present disclosure.

Although the following embodiments may be described with reference to energy conservation and energy efficiency in specific integrated circuits, such as in computing platforms or microprocessors, other embodiments are applicable to other types of integrated circuits and logic devices. Similar techniques and teachings of embodiments described herein may be applied to other types of circuits or semiconductor devices that may also benefit from better energy efficiency and energy conservation. For example, the disclosed embodiments are not limited to desktop computer systems or Ultrabooks™. And may be also used in other devices, such as handheld devices, tablets, other thin notebooks, systems on a chip (SOC) devices, and embedded applications. Some examples of handheld devices include cellular phones, Internet protocol devices, digital cameras, personal digital assistants (PDAs), and handheld PCs. Embedded applications typically include a microcontroller, a digital signal processor (DSP), a system on a chip, network computers (NetPC), set-top boxes, network hubs, wide area network (WAN) switches, or any other system that may perform the functions and operations taught below. Moreover, the apparatus', methods, and systems described herein are not limited to physical computing devices, but may also relate to software optimizations for energy conservation and efficiency. As will become readily apparent in the description below, the embodiments of methods, apparatus', and systems described herein (whether in reference to hardware, firmware, software, or a combination thereof) are vital to a 'green technology' future balanced with performance considerations.

As computing systems are advancing, the components therein are becoming more complex. As a result, the interconnect architecture to couple and communicate between the components is also increasing in complexity to ensure bandwidth requirements are met for optimal component operation. Furthermore, different market segments demand different aspects of interconnect architectures to suit the market's needs. For example, servers require higher performance, while the mobile ecosystem is sometimes able to sacrifice overall performance for power savings. Yet, it's a singular purpose of most fabrics to provide highest possible performance with maximum power saving. Below, a number of interconnects are discussed, which would potentially benefit from aspects of the disclosure described herein.

Note that the apparatus, methods, and systems described herein may be implemented in any electronic device or system. As specific illustrations, the figures provide exemplary systems for utilizing the invention as described herein. As the systems below are described in more detail, a number of different interconnects are disclosed, described, and revisited from the discussion above. And as is readily apparent, the advances described above may be applied to any of those interconnects, fabrics, or architectures.

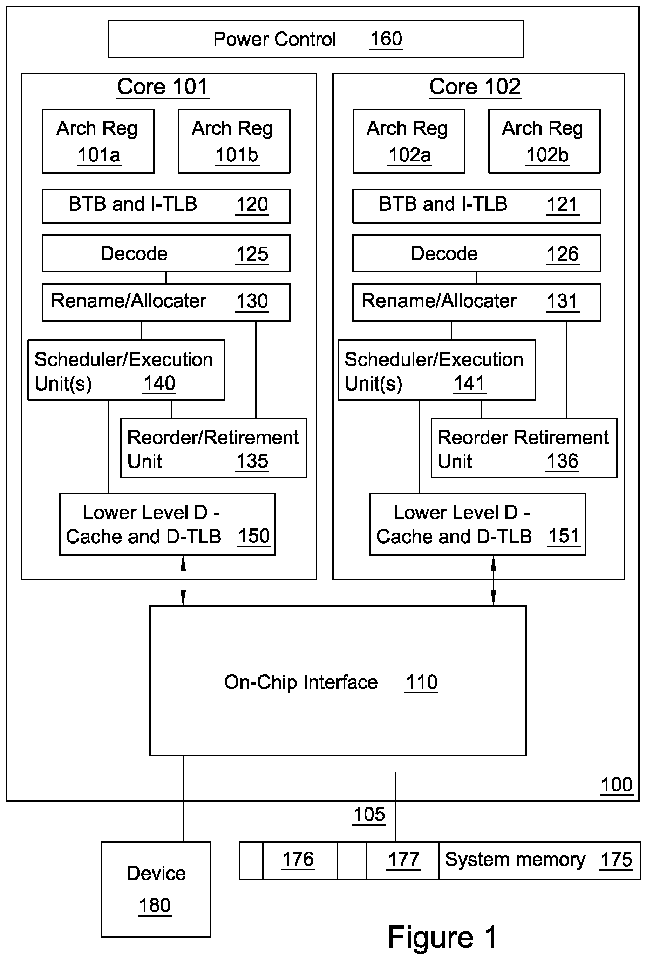

Referring to FIG. **1****,** an embodiment of a block diagram for a computing system including a multicore processor is depicted. Processor **100** includes any processor or processing device, such as a microprocessor, an embedded processor, a digital signal processor (DSP), a network processor, a handheld processor, an application processor, a co-processor, a system on a chip (SOC), or other device to execute code. Processor **100,** in one embodiment, includes at least two cores-core **101** and **102,** which may include asymmetric cores or symmetric cores (the illustrated embodiment). However, processor **100** may include any number of processing elements that may be symmetric or asymmetric.

In one embodiment, a processing element refers to hardware or logic to support a software thread. Examples of hardware processing elements include: a thread unit, a thread slot, a thread, a process unit, a context, a context unit, a logical processor, a hardware thread, a core, and/or any other element, which is capable of holding a state for a processor, such as an execution state or architectural state. In other words, a processing element, in one embodiment, refers to any hardware capable of being independently associated with code, such as a software thread, operating system, application, or other code. A physical processor (or processor socket) typically refers to an integrated circuit, which potentially includes any number of other processing elements, such as cores or hardware threads.

A core often refers to logic located on an integrated circuit capable of maintaining an independent architectural state, wherein each independently maintained architectural state is associated with at least some dedicated execution resources. In contrast to cores, a hardware thread typically refers to any logic located on an integrated circuit capable of maintaining an independent architectural state, wherein the independently maintained architectural states share access to execution resources. As can be seen, when certain resources are shared and others are dedicated to an architectural state, the line between the nomenclature of a hardware thread and core overlaps. Yet often, a core and a hardware thread are viewed by an operating system as individual logical processors, where the operating system is able to individually schedule operations on each logical processor.

Physical processor **100,** as illustrated in FIG. **1****,** includes two cores-core **101** and **102.** Here, core **101** and **102** are considered symmetric cores, i.e. cores with the same configurations, functional units, and/or logic. In another embodiment, core **101** includes an out-of-order processor core, while core **102** includes an in-order processor core. However, cores **101** and **102** may be individually selected from any type of core, such as a native core, a software managed core, a core adapted to execute a native Instruction Set Architecture (ISA), a core adapted to execute a translated Instruction Set Architecture (ISA), a co-designed core, or other known core. In a heterogeneous core environment (i.e. asymmetric cores), some form of translation, such a binary translation, may be utilized to schedule or execute code on one or both cores. Yet to further the discussion, the functional units illustrated in core **101** are described in further detail below, as the units in core **102** operate in a similar manner in the depicted embodiment.

As depicted, core **101** includes two hardware threads **101a** and **101b,** which may also be referred to as hardware thread slots **101a** and **101b.** Therefore, software entities, such as an operating system, in one embodiment potentially view processor **100** as four separate processors, i.e., four logical processors or processing elements capable of executing four software threads concurrently. As alluded to above, a first thread is associated with architecture state registers **101a,** a second thread is associated with architecture state registers **101b,** a third thread may be associated with architecture state registers **102a,** and a fourth thread may be associated with architecture state registers **102b.** Here, each of the architecture state registers (**101a, 101b, 102a,** and **102b**) may be referred to as processing elements, thread slots, or thread units, as described above. As illustrated, architecture state registers **101a** are replicated in architecture state registers **101b,** so individual architecture states/contexts are capable of being stored for logical processor **101a** and logical processor **101b.** In core **101,** other smaller resources, such as instruction pointers and renaming logic in allocator and renamer block **130** may also be replicated for threads **101a** and **101b.** Some resources, such as re-order buffers in reorder/retirement unit **135,** ILTB **120,** load/store buffers, and queues may be shared through partitioning. Other resources, such as general purpose internal registers, page-table base register(s), low-level data-cache and data-TLB **115,** execution unit(s) 140, and portions of out-of-order unit **135** are potentially fully shared.

Processor **100** often includes other resources, which may be fully shared, shared through partitioning, or dedicated by/to processing elements. In FIG. **1****,** an embodiment of a purely exemplary processor with illustrative logical units/resources of a processor is illustrated. Note that a processor may include, or omit, any of these functional units, as well as include any other known functional units, logic, or firmware not depicted. As illustrated, core **101** includes a simplified, representative out-of-order (OOO) processor core. But an in-order processor may be utilized in different embodiments. The OOO core includes a branch target buffer **120** to predict branches to be executed/taken and an instruction-translation buffer (I-TLB) **120** to store address translation entries for instructions.

Core **101** further includes decode module **125** coupled to fetch unit **120** to decode fetched elements. Fetch logic, in one embodiment, includes individual sequencers associated with thread slots **101a, 101b,** respectively. Usually core **101** is associated with a first ISA, which defines/specifies instructions executable on processor **100.** Often machine code instructions that are part of the first ISA include a portion of the instruction (referred to as an opcode), which references/specifies an instruction or operation to be performed. Decode logic **125** includes circuitry that recognizes these instructions from their opcodes and passes the decoded instructions on in the pipeline for processing as defined by the first ISA. For example, as discussed in more detail below decoders **125,** in one embodiment, include logic designed or adapted to recognize specific instructions, such as transactional instruction. As a result of the recognition by decoders **125,** the architecture or core **101** takes specific, predefined actions to perform tasks associated with the appropriate instruction. It is important to note that any of the tasks, blocks, operations, and methods described herein may be performed in response to a single or multiple instructions; some of which may be new or old instructions. Note decoders **126,** in one embodiment, recognize the same ISA (or a subset thereof). Alternatively, in a heterogeneous core environment, decoders **126** recognize a second ISA (either a subset of the first ISA or a distinct ISA).

In one example, allocator and renamer block **130** includes an allocator to reserve resources, such as register files to store instruction processing results. However, threads **101a** and **101b** are potentially capable of out-of-order execution, where allocator and renamer block **130** also reserves other resources, such as reorder buffers to track instruction results. Unit **130** may also include a register renamer to rename program/instruction reference registers to other registers internal to processor **100.** Reorder/retirement unit **135** includes components, such as the reorder buffers mentioned above, load buffers, and store buffers, to support out-of-order execution and later in-order retirement of instructions executed out-of-order.

Scheduler and execution unit(s) block **140,** in one embodiment, includes a scheduler unit to schedule instructions/operation on execution units. For example, a floating point instruction is scheduled on a port of an execution unit that has an available floating point execution unit. Register files associated with the execution units are also included to store information instruction processing results. Exemplary execution units include a floating point execution unit, an integer execution unit, a jump execution unit, a load execution unit, a store execution unit, and other known execution units.

Lower level data cache and data translation buffer (D-TLB) **150** are coupled to execution unit(s) **140.** The data cache is to store recently used/operated on elements, such as data operands, which are potentially held in memory coherency states. The D-TLB is to store recent virtual/linear to physical address translations. As a specific example, a processor may include a page table structure to break physical memory into a plurality of virtual pages.

Here, cores **101** and **102** share access to higher-level or further-out cache, such as a second level cache associated with on-chip interface **110.** Note that higher-level or further-out refers to cache levels increasing or getting further way from the execution unit(s). In one embodiment, higher-level cache is a last-level data cache-last cache in the memory hierarchy on processor **100**-such as a second or third level data cache. However, higher level cache is not so limited, as it may be associated with or include an instruction cache. A trace cache-a type of instruction cache-instead may be coupled after decoder **125** to store recently decoded traces. Here, an instruction potentially refers to a macro-instruction (i.e. a general instruction recognized by the decoders), which may decode into a number of micro-instructions (micro-operations).

In the depicted configuration, processor **100** also includes on-chip interface module **110.** Historically, a memory controller, which is described in more detail below, has been included in a computing system external to processor **100.** In this scenario, on-chip interface **110** is to communicate with devices external to processor **100,** such as system memory **175,** a chipset (often including a memory controller hub to connect to memory **175** and an I/O controller hub to connect peripheral devices), a memory controller hub, a northbridge, or other integrated circuit. And in this scenario, bus **105** may include any known interconnect, such as multi-drop bus, a point-to-point interconnect, a serial interconnect, a parallel bus, a coherent (e.g. cache coherent) bus, a layered protocol architecture, a differential bus, and a GTL bus.

Memory **175** may be dedicated to processor **100** or shared with other devices in a system. Common examples of types of memory **175** include DRAM, SRAM, non-volatile memory (NV memory), and other known storage devices. Note that device **180** may include a graphic accelerator, processor or card coupled to a memory controller hub, data storage coupled to an I/O controller hub, a wireless transceiver, a flash device, an audio controller, a network controller, or other known device.

Recently however, as more logic and devices are being integrated on a single die, such as SOC, each of these devices may be incorporated on processor **100.** For example in one embodiment, a memory controller hub is on the same package and/or die with processor **100.** Here, a portion of the core (an on-core portion) **110** includes one or more controller(s) for interfacing with other devices such as memory **175** or a graphics device **180.** The configuration including an interconnect and controllers for interfacing with such devices is often referred to as an on-core (or un-core configuration). As an example, on-chip interface **110** includes a ring interconnect for on-chip communication and a high-speed serial point-to-point link **105** for off-chip communication. Yet, in the SOC environment, even more devices, such as the network interface, co-processors, memory **175,** graphics processor **180,** and any other known computer devices/interface may be integrated on a single die or integrated circuit to provide small form factor with high functionality and low power consumption.

In one embodiment, processor **100** is capable of executing a compiler, optimization, and/or translator code **177** to compile, translate, and/or optimize application code **176** to support the apparatus and methods described herein or to interface therewith. A compiler often includes a program or set of programs to translate source text/code into target text/code. Usually, compilation of program/application code with a compiler is done in multiple phases and passes to transform hi-level programming language code into low-level machine or assembly language code. Yet, single pass compilers may still be utilized for simple compilation. A compiler may utilize any known compilation techniques and perform any known compiler operations, such as lexical analysis, preprocessing, parsing, semantic analysis, code generation, code transformation, and code optimization.

Larger compilers often include multiple phases, but most often these phases are included within two general phases: (1) a front-end, *i.e.* generally where syntactic processing, semantic processing, and some transformation/optimization may take place, and (2) a back-end, *i*.*e*. generally where analysis, transformations, optimizations, and code generation takes place. Some compilers refer to a middle, which illustrates the blurring of delineation between a front-end and back end of a compiler. As a result, reference to insertion, association, generation, or other operation of a compiler may take place in any of the aforementioned phases or passes, as well as any other known phases or passes of a compiler. As an illustrative example, a compiler potentially inserts operations, calls, functions, etcetera in one or more phases of compilation, such as insertion of calls/operations in a front-end phase of compilation and then transformation of the calls/operations into lower-level code during a transformation phase. Note that during dynamic compilation, compiler code or dynamic optimization code may insert such operations/calls, as well as optimize the code for execution during runtime. As a specific illustrative example, binary code (already compiled code) may be dynamically optimized during runtime. Here, the program code may include the dynamic optimization code, the binary code, or a combination thereof.

Similar to a compiler, a translator, such as a binary translator, translates code either statically or dynamically to optimize and/or translate code. Therefore, reference to execution of code, application code, program code, or other software environment may refer to: (1) execution of a compiler program(s), optimization code optimizer, or translator either dynamically or statically, to compile program code, to maintain software structures, to perform other operations, to optimize code, or to translate code; (2) execution of main program code including operations/calls, such as application code that has been optimized/compiled; (3) execution of other program code, such as libraries, associated with the main program code to maintain software structures, to perform other software related operations, or to optimize code; or (4) a combination thereof.

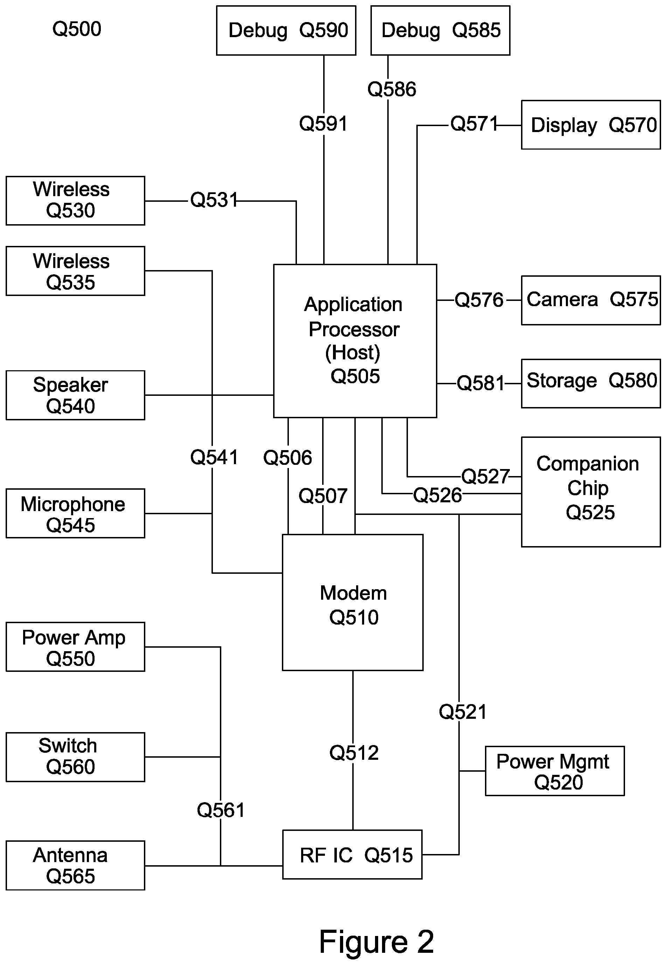

Referring to Figure **2****,** an embodiment of a low power computing platform is depicted. In one embodiment, low power computing platform **200** incudes a user endpoint, such as a phone, smartphone, tablet, ultraportable notebook, a notebook, a desktop, a server, a transmitting device, a receiving device, or any other known or available computing platform. The illustrated platform depicts a number of different interconnects to couple multiple different devices. Exemplary discussion of these interconnect are provided below to provide options on implementation and inclusion. However, a low power platform **200** is not required to include or implement the depicted interconnects or devices. Furthermore, other devices and interconnect structures that are not specifically shown may be included.

Starting at the center of the diagram, platform **200** includes application processor **205.** Often this includes a low power processor, which may be a version of a processor configuration described herein or known in the industry. As one example, processor **200** is implemented as a system on a chip (SoC). As a specific illustrative example, processor **200** includes an Intel® Architecture Core™-based processor such as an i3, i5, i7 or another such processor available from Intel Corporation, Santa Clara, CA. However, understand that other low power processors such as available from Advanced Micro Devices, Inc. (AMD) of Sunnyvale, CA, a MIPS-based design from MIPS Technologies, Inc. of Sunnyvale, CA, an ARM-based design licensed from ARM Holdings, Ltd. or customer thereof, or their licensees or adopters may instead be present in other embodiments such as an Apple A5/A6 processor, a Qualcomm Snapdragon processor, or TI OMAP processor.

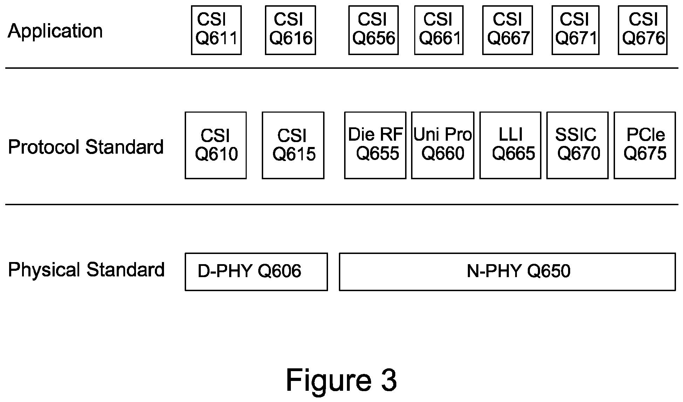

FIG. 3 is a diagram illustrating an embodiment of a low power data transmission platform. As shown, an application layer, protocol standard layer, and physical standard layer are displayed in the figure. In particular, the application layer provides various instances of a camera serial interface (CSI) - **311, 316, 356, 361, 367, 371,** and **376.** Notably, CSI may include a unidirectional differential serial interface to transmit data and clock signals.

The protocol standard layer includes another instance of a CSI interface **310** and a Digital Serial Interface (DSI) **315.** DSI may define a protocol between a host processor and a peripheral device using a D-PHY physical interface. In addition, the protocol standard layer includes a DigRF interface **355,** UniPro interface **360,** Low Latency Interface (LLI) **365,** SuperSpeed InterChip (SSIC) interface **370,** and Peripheral Component Interconnect Express (PCIe) **375** interface.

Lastly, the physical standard layer provides a D-PHY **305** sub-layer. It may be understood by one having ordinary skill in the art that D-PHY includes a physical layer solution upon which MIPI camera interfaces, display serial interfaces, and general purpose high-speed/low-power interfaces are based. In addition, the physical standard layer includes a M-PHY sub-layer **Q650** which is the successor of D-PHY, requiring less pins and providing more bandwidth per pin (pair) with improved power efficiency.

Embodiments of the present inventions, as further described below, may be implemented in various systems and platforms, including those illustrated in Figures 1, 2, and 3.

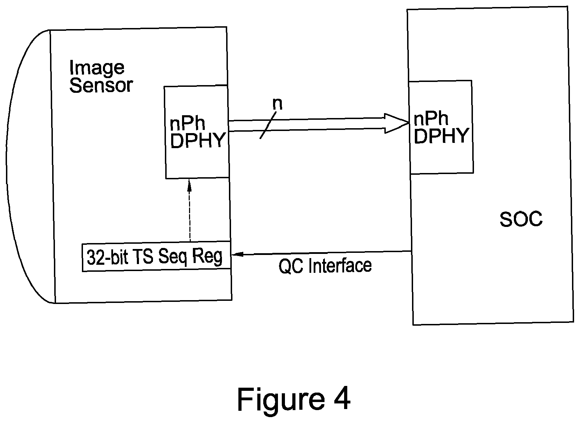

Figure 4 illustrates a mobile ecosystem using a CSI2 stack which includes a camera image sensor and a SOC device. In one embodiment, to ensure that the channel(s) for nPhase D-PHY applications are robust, a known training ordered set (TS) is sent from the SOC device to the camera image sensor via an I²C interface according to a CSI2 CCI (camera command interface) protocol. Subsequently, a command is generated from the SOC device via the I²C interface to generate the TS ordered set from the camera image sensor.

For example, a solution to ensure robust channel for nPhase D-PHY solutions may includes the following. A 32-bit register residing in the camera image sensor may be programmed with a known TS Ordered set (e.g., 32'hA5A5) using an existing I²C interface via CSI2 CCI protocol. In one embodiment, the TS Ordered set includes a predetermined data pattern. Then, a command may be launched via CSI2 CCI from the SOC device to transmit the TS Ordered Set via nPhase channel during Horizontal Blanking/Vertical Blanking intervals. In one or more applications, the time span of the intervals may last for approximately 10 microseconds. The command may be repeated until robust DLL lock has been achieved by the nPhase receiver in the SOC device. In one embodiment, the command may be repeated several times (e.g., 10 iterations) for various DLL delay settings until the predetermined data pattern is reproduced.

Various variations of this embodiment are possible within the scope of the present invention. A training sequence may include launching a command from a SOC device to transmit a TS Orders Set via an nPhase channel during blanking intervals. The training sequence may commence during initialization or periodically during operation to recalibrate the link. The blanking intervals may include horizontal and/or vertical blanking intervals. The command may include a setting for a DLL delay. The TS Ordered Set may be an unique data pattern which is programmed within a register residing in a camera image sensor. The command may continue to be re-launched with a different DLL delay value until a match of the programmed unique data pattern is achieved.

The use of one or more of these embodiments may be desired for the following reasons. Embodiments may save bandwidth by employing the training sequence during blanking interval periods within the channel. The sequence may be performed during multiple intervals such that a portion of the sequence may be performed during a single interval. The sequence may be performed during initialization and periodically to maintain channel robustness.

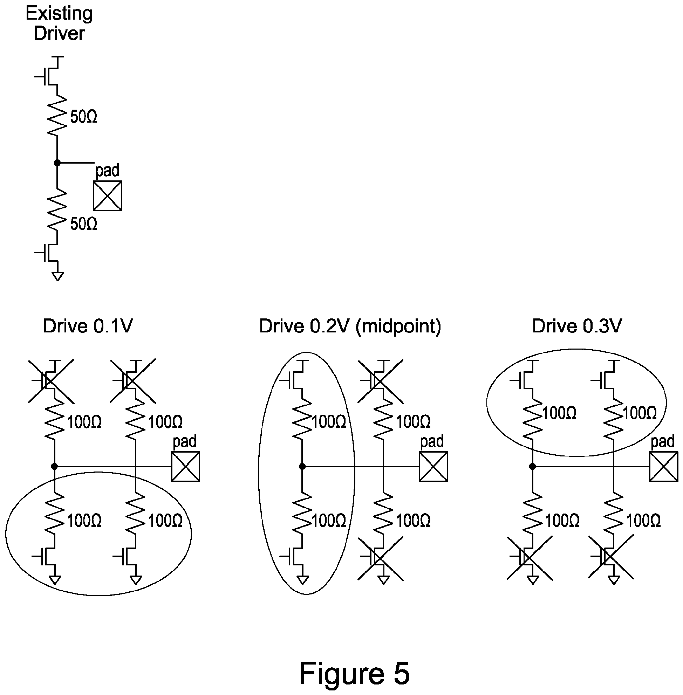

Figure 5 illustrates a MIPI DSI output driver according to an embodiment of the present invention. The output driver operates with either the 50 ohm pullup or the 50 ohm pulldown enabled. In one embodiment, the driver operates with a 0.4V supply and drives into a 50 ohm termination to 0.2V. One having ordinary skill in the art may appreciate that external to the driver is a termination point at a receiver (not shown).

In one embodiment, a 3-Phase operation splits the output driver into two 100 ohm drivers that may operate in one of three modes, drive low (0.1V) where both 100 ohm pulldowns are enabled in parallel, drive mid (0.2V) where a 100 ohm pullup operates in parallel with a 100 ohm pulldown, and drive high (0.3V) where both 100 ohm pullups are enabled. In one embodiment, the driver operates at 0.4V with a 50 ohm termination to 0.2V.

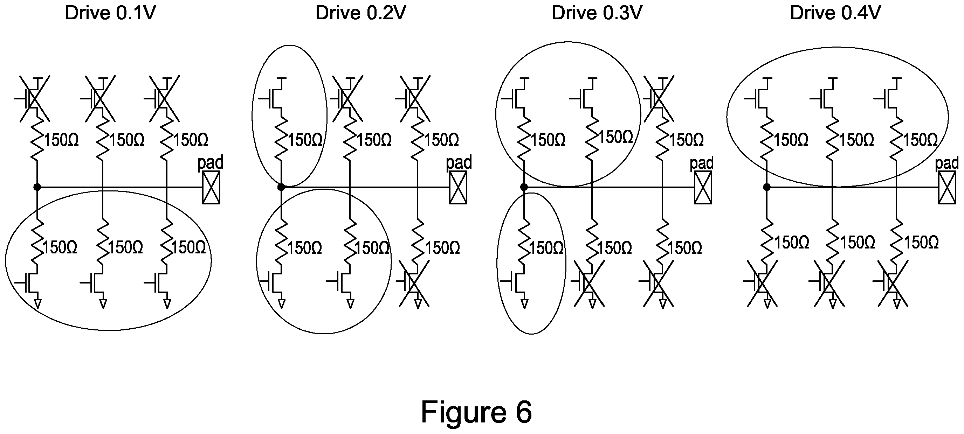

Figure 6 illustrates further embodiments related to those of Figure 5. In one embodiment, for 4-Phase Mode, the output driver is partitioned into three 150 ohm drivers. The four modes of operation are shown with various combinations of the pullup and pulldown drivers enabled with the Thevenin equivalents of a 5-ohm output driver at different voltage levels. In addition, the supply voltage is increased to 0.5V with a 50 ohm termination to 0.25V. The four modes are: Drive 0.1V - turn on all pulldowns; Drive 0.2V - turn on 2 pulldowns, 1 pullup; Drive 0.3V - turn on 2 pullups, 1 pulldown; and Drive 0.4V - turn on all pullups.

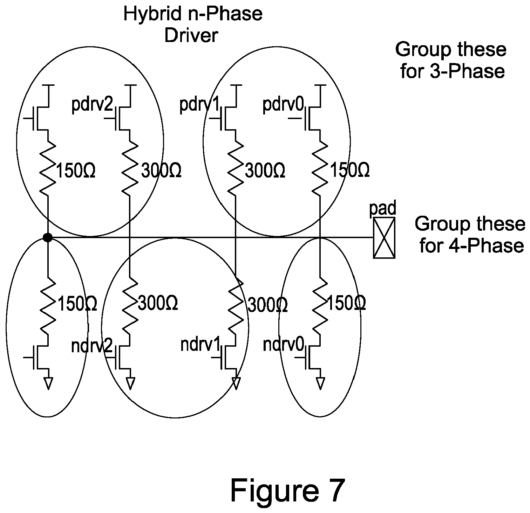

Figure 7 illustrates partitioning in a circuit according to an embodiment of the present invention to support both 3-Phase and 4-Phase modes. The 100 ohm driver used for 3-Phase is produced by using a 150 ohm driver in parallel with a 300 ohm driver. 150 ohm operation of 4-Phase is produced by using the two 300 ohm drivers to generate one of the required 150 ohm drivers.

The remaining part of the circuit is a small decoder to enable the various select transistors for each of the modes. DSI mode uses a single data bit to define a high or low state. 3-Phase and 4-Phase modes uses 2 data bits to define 3 or 4 states.

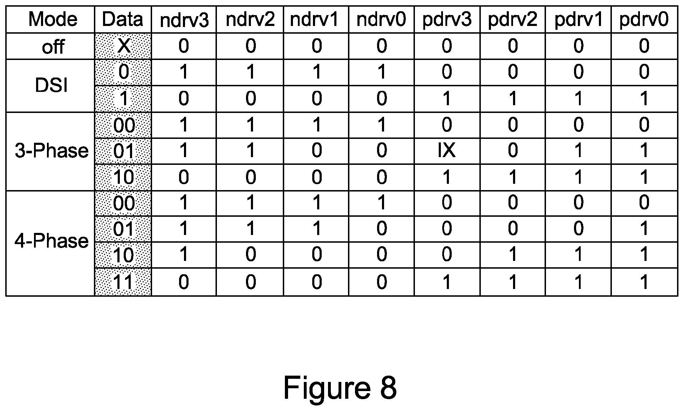

Figure 8 illustrates an embodiment in which 00, 01, 1X (see Data column) for 3-Phase represents 0.1V, 0.2V, and 0.3V, respectively. Further, 00, 01, 10, and 11 for 4-Phase represents 0.1V, 0.2V, 0.3V, and 0.4V, respectively.

Various variations of this embodiment are possible within the scope of the present invention. An output driver for 3-Phase and 4-Phase MIPI data mapping may include partitioning a single output driver into multiple drivers. The single output driver may be a 50 ohm driver that is partitioned into three 150 ohm drivers. A 100 ohm driver may be used for the 3-Phase MIPI data mapping which is produced by using a 150 ohm driver in parallel with a 300 ohm driver. A 150 ohm driver may be used for the 4-Phase MIPI data mapping which is produced by using two 300 ohm drivers to generate one the 150 ohm drivers. The 3-Phase MIPI data mapping may split the output driver into two 100 ohm drivers which may operate in one of three modes. The 4-Phase MIPI data mapping may operate in one of 4 modes - drive low, drive mid1, drive mid2, and drive high.

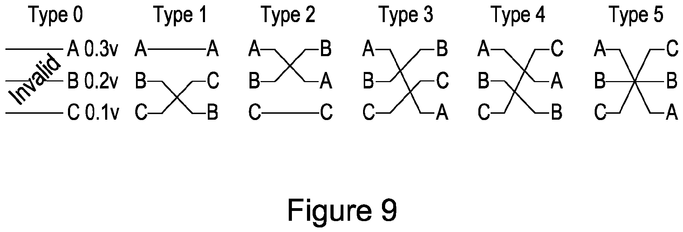

Figure 9 illustrates another embodiment. The MIPI 3-Phase defines 3 analog data signals to send data with each clock cycle. The 3 signals may be be driven to one of 3 different voltage levels, similar to MIPI CSI/DSI with an additional signal at 0.2V. At any time, one signal will be at each of the 3 voltage levels. There are 5 transition states with at least one toggling data pair. The valid states are marked as type 1 through 5.

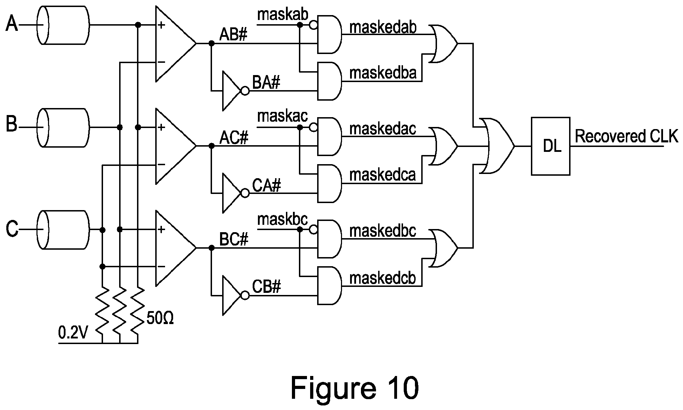

Figure 10 illustrates another embodiment in a 3-Phase clock recovery circuit. As shown, three data lines (A, B, and C) are routed to 3 differential comparators. Every data line is compared against each of the other data lines (A vs. B, A vs. C, and B vs. C). The true and complement of these comparator signals are sent to the masking circuit. Either the true or the complement signal will be masked out so that only the rising transitions remain to generate an early clock (preclk) for the DLL. The recovered clock (clkout) is produced after a fixed DLL delay. The recovered clock is used to latch the data signals at the optimal time in the center of the data eye. The latched data signals become the mask for the next data cycle. The recovery circuit shown may be a component of a MIPI 3-Phase receiver. The first 3-Phase products include camera sensors and a SOC device consistent with the present disclosure may implement the receiver portion of the interface.

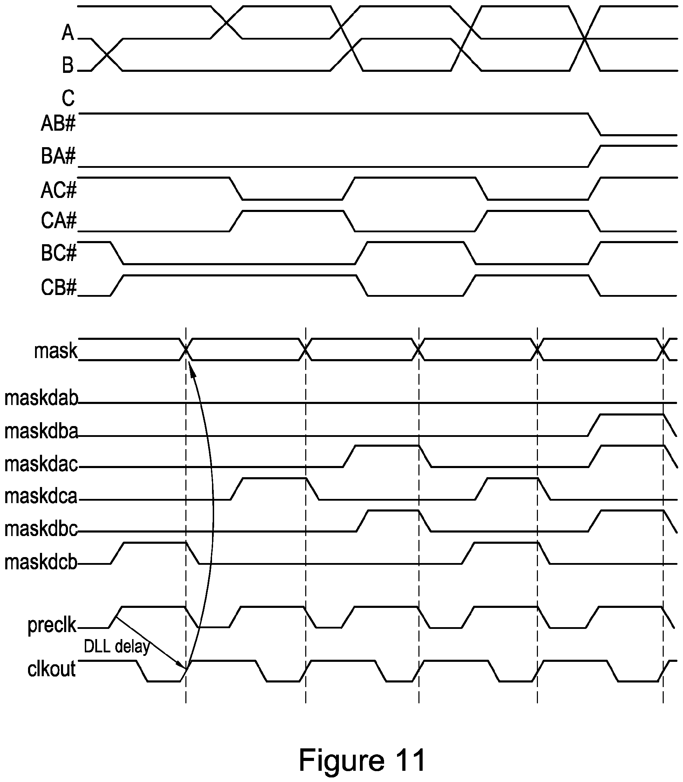

Figure 11 illustrates a timing diagram of possible data patterns generated by toggling the 3 data lines. As shown, when the comparator output signals (AB#, BA#, etc.) include rising and falling transitions when the pads toggle. In one embodiment, one of the comparator output signals will be filtered out so that the masked signals will all be low at the beginning of the cycle. In the embodiment, at least one of the comparator output signals will toggle high, generating the preclk. A DLL delay is added to produce the recovered clock, clkout.

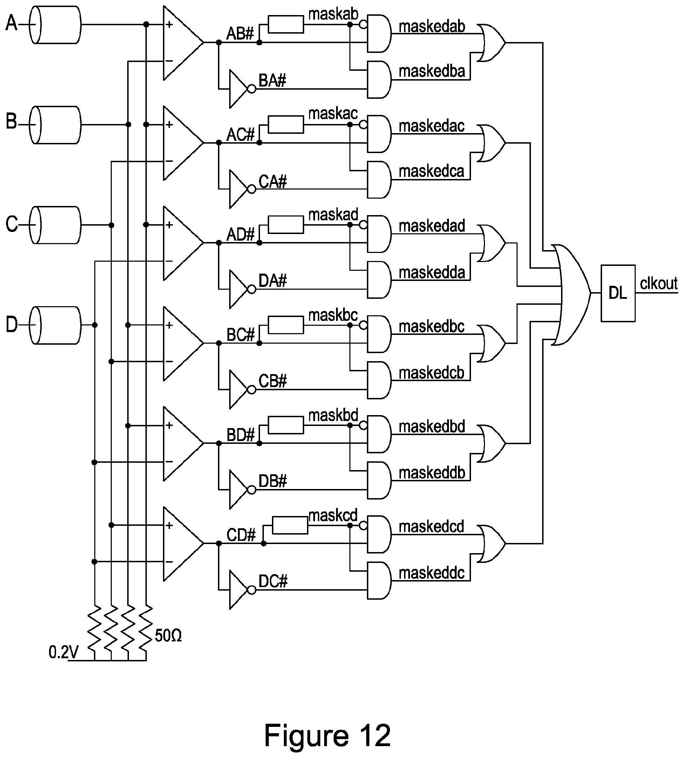

Figure 12 illustrates an embodiment in a 4-Phase clock recovery circuit. In one embodiment, expanding the clock recovery circuit to 4-Phase involves adding additional comparators and a wider OR gate to generate the masked signals. In the embodiment, 4-Phase includes 6 comparators to compare each pin against all other pins. Additionally, each comparator may be assigned a mask and each comparator may include a flip flop circuit (not shown). A small amount of logic may be added to switch between 3-Phase and 4-Phase operation in a dual-mode design. The recovery circuit may be embedded inside the analog front end of the 3-Phase receiver.

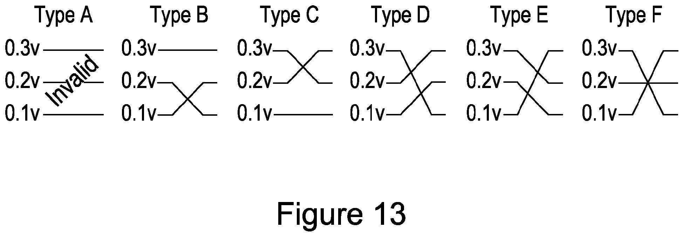

Figure 13 shows 6 possible assignments from an existing state to the 3 different voltage levels in the next state. Transition type A is invalid because there are no transitions, so the clock is undetectable. Each of the remaining 5 transition types are valid. Two of the transition types (D and E) have all 3 wires toggling. The transition types may be followed by any valid transition types without risk. The other 3 transition types (B, C, and F) have one static signal. The transition type may be followed by any transition type except a repeat of the previous transition type. For example, transition type B may be followed by C, D, E, or F, but not another type B transition.

MIPI 3-Phase is a protocol which may enhance MIPI CSI and MIPI DSI data transfers by introducing a third data signal at an intermediate voltage level. In one embodiment, at any given time, one analog signal will be at 0.1V, 0.2V, and 0.3V. In addition, each data cycle toggles at least two of the three analog signals depending on the data pattern. As such, a self-clocking interface may be achieved. Embodiments may utilize a new data mapping function that guarantees to toggle all analog signals at least once every two clock cycles. In one embodiment, there are 5 transition states that may occur during each clock cycle. The embodiment uses an intelligent mapping algorithm to choose a transition state that forces a signal to toggle if it did not toggle during the previous cycle. Each state may have at least 4 available next states, allowing two bits of information to be transferred per clock period.

The embodiment may reduce intersymbol interference (ISI) to a data length of 2 clock periods for all 3 analog data signals. The embodiment has no limit on the length of a static data signal. Moreover, the embodiment may utilize a new state machine for the encoder and decoder circuits. The lookup table is much simpler than the existing lookup table. It only uses to look at 2 bits of data from the previous clock cycle along with the current 2 data bits to determine the next transition. Every possible data pattern will produce at least 4 potential transition states to allow 2 bits of information to be packed into each clock cycle. Further, the embodiment may yield better ISI and run at a faster clock rate to make up for the lower data density (2 data bits per clock vs. 2.28 data bits per clock for the existing MIPI 3-Phase proposal). Lastly, a much simpler encoder and decoder may be configured for the MIPI 3-Phase protocol described.

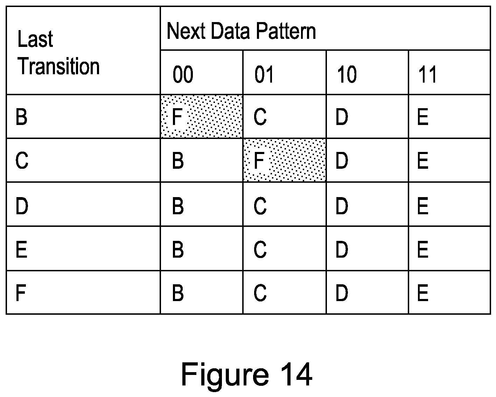

Figure 14 shows a transition table defining the mapping that would allow 4 next states from every existing state and prevents data pattern from having a data length of more than 1 clock cycle. Each existing state defines 4 next states so only 2 bits of data information needs to be transmitted per clock period.

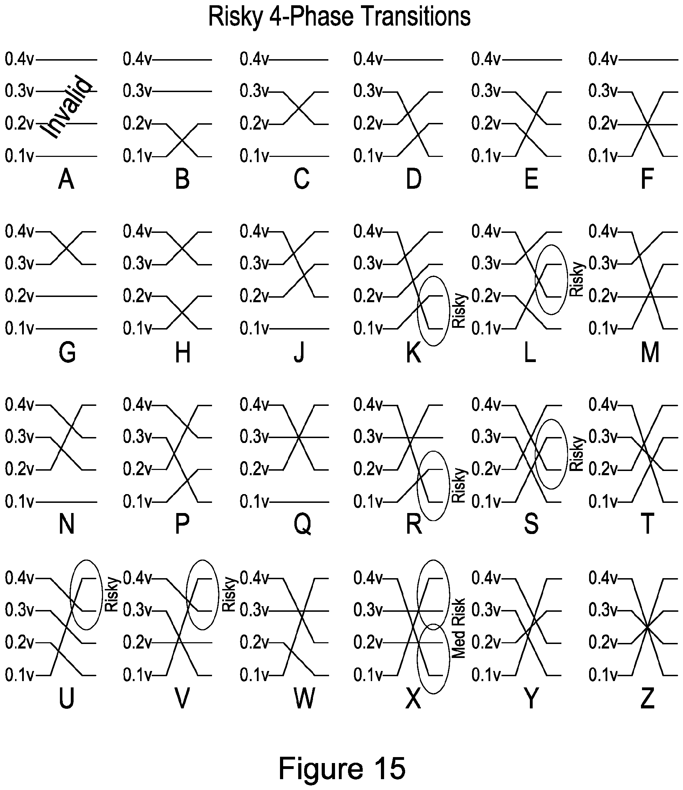

Figure 15 shows an embodiment in a MIPI 4-Phase enhancement to the proposed 3-Phase definition in the MIPI technical steering group. It drives 4 analog data signals to 4 different voltage levels with at least one pair of signals transitioning during every clock cycle. There are 23 different transition types. The 16 data transitions that result in the best voltage margins are selected to allow 4 bits of information to be transmitted per clock cycle.

The existing 3-Phase proposal provides a maximum data bandwidth of 2.28 bits per cycle using 3 wires. This embodiment increases the data bandwidth to 4 bits of information per clock cycle using 4 wires. This is a 31% improvement in data bandwidth per wire when running at the same frequency.

The MIPI 3-Phase protocol defines 3 analog data signals driven to one of 3 different voltage levels, similar to MIPI CSI/DSI with an additional signal at 0.2V. At any time, one signal will be at each of the 3 voltage levels. Extending this to 4-Phase operation adds an additional wire driven to a 4th voltage level. Every clock cycle results in at least 2 of the signals transitioning, and sometimes 3 or 4 signals transitioning. The table shows every possible transition state with 4 signals at 4 voltage levels. These transition states are labeled A through Z (ignoring I and O). Note that transition type A is invalid since it does not have any transitions so a clock cannot be recovered.

Some of these data transitions are considered risky since they have a large voltage transition and will only develop a small amount of voltage margin. For example, data transition K, L, R, S, U, V, and X may be considered risky. These transitions will not be used and only the best 16 best transitions are selected.

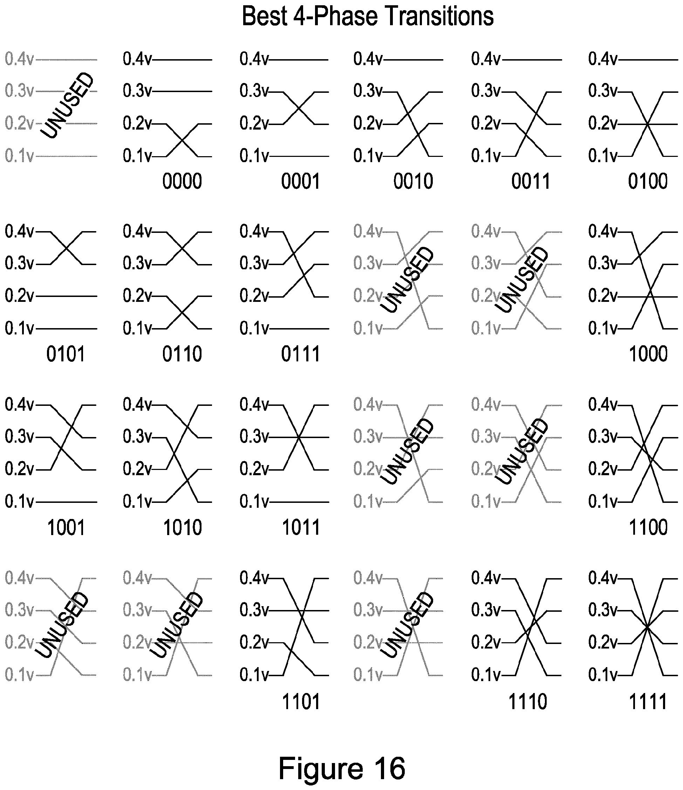

Figure 16 shows a table of the 16 best transition states and with 4 data bits assigned to each one. For example, if the data pattern is "0000", then the lower 2 data lines will toggle and the upper 2 data lines remain static.

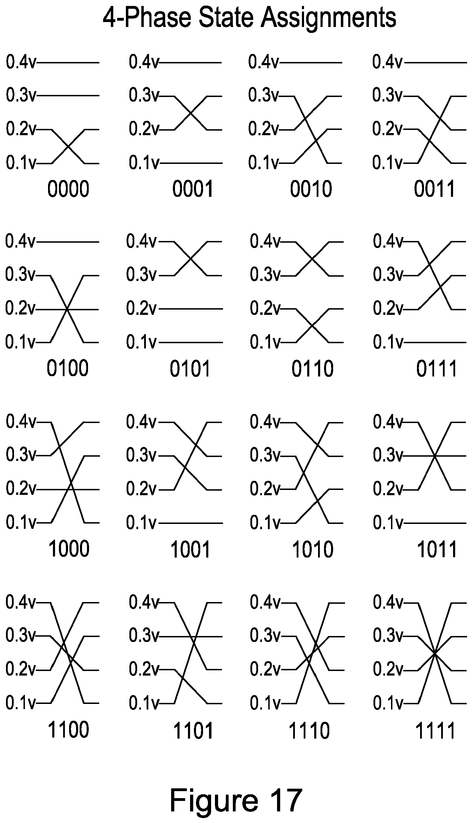

Figure 17 shows an algorithm that may include a simple decoder to map the 4 bit data pattern into the 16 different transition states. The receiver would utilize an inverse table to map the 16 transition states back into 4 data bits.

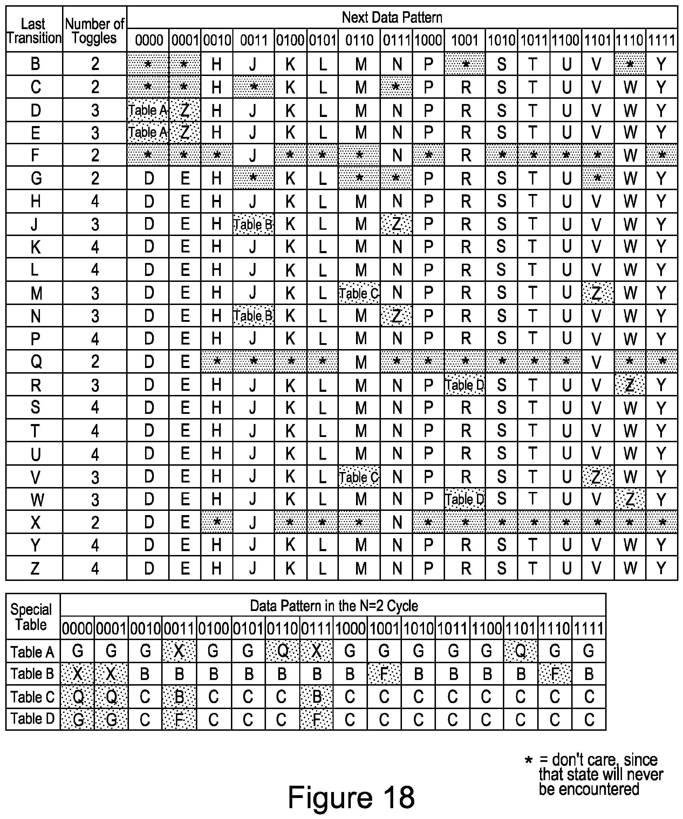

Figure 18 is a transition table showing the recommended next states for each of the 16 states defined by the 4 data bits.

MIPI 4-Phase drives 4 analog data signals to 4 different voltage levels with at least one pair of signals transitioning during every clock cycle. Timing distortion can occur when signals remain static for long periods of time (e.g., ISI). The embodiment defines a data mapping algorithm that forces every data signal to toggle at least once for every 2 clock cycles to limit the effects of ISI.

The algorithm determines which signals did not transition during the previous cycle and determines the transition types to use for the next cycle. In one embodiment, there are 16 possible transition types and the algorithm chooses 1 of 16 of them to pack 4 bits of data per clock cycle.

The embodiment increases the data bandwidth to 4 bits of information per clock cycle using 4 wires which provides a 31% improvement in data bandwidth per wire when running at the same frequency.

While the present disclosure has been described with respect to a limited number of embodiments, those skilled in the art will appreciate numerous modifications and variations therefrom. It is intended that the appended claims cover all such modifications and variations as fall within the true spirit and scope of this present disclosure.

A design may go through various stages, from creation to simulation to fabrication. Data representing a design may represent the design in a number of manners. First, as is useful in simulations, the hardware may be represented using a hardware description language or another functional description language. Additionally, a circuit level model with logic and/or transistor gates may be produced at some stages of the design process. Furthermore, most designs, at some stage, reach a level of data representing the physical placement of various devices in the hardware model. In the case where conventional semiconductor fabrication techniques are used, the data representing the hardware model may be the data specifying the presence or absence of various features on different mask layers for masks used to produce the integrated circuit. In any representation of the design, the data may be stored in any form of a machine readable medium. A memory or a magnetic or optical storage such as a disc may be the machine readable medium to store information transmitted via optical or electrical wave modulated or otherwise generated to transmit such information. When an electrical carrier wave indicating or carrying the code or design is transmitted, to the extent that copying, buffering, or re-transmission of the electrical signal is performed, a new copy is made. Thus, a communication provider or a network provider may store on a tangible, machine-readable medium, at least temporarily, an article, such as information encoded into a carrier wave, embodying techniques of embodiments of the present disclosure.

A module as used herein refers to any combination of hardware, software, and/or firmware. As an example, a module includes hardware, such as a micro-controller, associated with a non-transitory medium to store code adapted to be executed by the micro-controller. Therefore, reference to a module, in one embodiment, refers to the hardware, which is specifically configured to recognize and/or execute the code to be held on a non-transitory medium. Furthermore, in another embodiment, use of a module refers to the non-transitory medium including the code, which is specifically adapted to be executed by the microcontroller to perform predetermined operations. And as may be inferred, in yet another embodiment, the term module (in this example) may refer to the combination of the microcontroller and the non-transitory medium. Often module boundaries that are illustrated as separate commonly vary and potentially overlap. For example, a first and a second module may share hardware, software, firmware, or a combination thereof, while potentially retaining some independent hardware, software, or firmware. In one embodiment, use of the term logic includes hardware, such as transistors, registers, or other hardware, such as programmable logic devices.

Use of the phrase "to" or "configured to," in one embodiment, refers to arranging, putting together, manufacturing, offering to sell, importing and/or designing an apparatus, hardware, logic, or element to perform a designated or determined task. In this example, an apparatus or element thereof that is not operating is still "configured to" perform a designated task if it is designed, coupled, and/or interconnected to perform said designated task. As a purely illustrative example, a logic gate may provide a 0 or a 1 during operation. But a logic gate "configured to" provide an enable signal to a clock does not include every potential logic gate that may provide a 1 or 0. Instead, the logic gate is one coupled in some manner that during operation the 1 or 0 output is to enable the clock. Note once again that use of the term "configured to" does not require operation, but instead focus on the latent state of an apparatus, hardware, and/or element, where in the latent state the apparatus, hardware, and/or element is designed to perform a particular task when the apparatus, hardware, and/or element is operating.

Furthermore, use of the phrases "capable of/to," and or "operable to," in one embodiment, refers to some apparatus, logic, hardware, and/or element designed in such a way to enable use of the apparatus, logic, hardware, and/or element in a specified manner. Note as above that use of to, capable to, or operable to, in one embodiment, refers to the latent state of an apparatus, logic, hardware, and/or element, where the apparatus, logic, hardware, and/or element is not operating but is designed in such a manner to enable use of an apparatus in a specified manner.

A value, as used herein, includes any known representation of a number, a state, a logical state, or a binary logical state. Often, the use of logic levels, logic values, or logical values is also referred to as 1's and 0's, which simply represents binary logic states. For example, a 1 refers to a high logic level and 0 refers to a low logic level. In one embodiment, a storage cell, such as a transistor or flash cell, may be capable of holding a single logical value or multiple logical values. However, other representations of values in computer systems have been used. For example the decimal number ten may also be represented as a binary value of 1010 and a hexadecimal letter A. Therefore, a value includes any representation of information capable of being held in a computer system.

Moreover, states may be represented by values or portions of values. As an example, a first value, such as a logical one, may represent a default or initial state, while a second value, such as a logical zero, may represent a non-default state. In addition, the terms reset and set, in one embodiment, refer to a default and an updated value or state, respectively. For example, a default value potentially includes a high logical value, i.e. reset, while an updated value potentially includes a low logical value, i.e. set. Note that any combination of values may be utilized to represent any number of states.

The embodiments of methods, hardware, software, firmware or code set forth above may be implemented via instructions or code stored on a machine-accessible, machine readable, computer accessible, or computer readable medium which are executable by a processing element. A non-transitory machine-accessible/readable medium includes any mechanism that provides (i.e., stores and/or transmits) information in a form readable by a machine, such as a computer or electronic system. For example, a non-transitory machine-accessible medium includes random-access memory (RAM), such as static RAM (SRAM) or dynamic RAM (DRAM); ROM; magnetic or optical storage medium; flash memory devices; electrical storage devices; optical storage devices; acoustical storage devices; other form of storage devices for holding information received from transitory (propagated) signals (e.g., carrier waves, infrared signals, digital signals); etc, which are to be distinguished from the non-transitory mediums that may receive information there from.

Instructions used to program logic to perform embodiments of the disclosure may be stored within a memory in the system, such as DRAM, cache, flash memory, or other storage. Furthermore, the instructions may be distributed via a network or by way of other computer readable media. Thus a machine-readable medium may include any mechanism for storing or transmitting information in a form readable by a machine (e.g., a computer), but is not limited to, floppy diskettes, optical disks, Compact Disc, Read-Only Memory (CD-ROMs), and magnetooptical disks, Read-Only Memory (ROMs), Random Access Memory (RAM), Erasable Programmable Read-Only Memory (EPROM), Electrically Erasable Programmable Read-Only Memory (EEPROM), magnetic or optical cards, flash memory, or a tangible, machine-readable storage used in the transmission of information over the Internet via electrical, optical, acoustical or other forms of propagated signals (e.g., carrier waves, infrared signals, digital signals, etc.). Accordingly, the computer-readable medium includes any type of tangible machine-readable medium suitable for storing or transmitting electronic instructions or information in a form readable by a machine (e.g., a computer)

Reference throughout this specification to "one embodiment" or "an embodiment" means that a particular feature, structure, or characteristic described in connection with the embodiment is included in at least one embodiment of the present disclosure. Thus, the appearances of the phrases "in one embodiment" or "in some embodiments" in various places throughout this specification are not necessarily all referring to the same embodiment. Furthermore, the particular features, structures, or characteristics may be combined in any suitable manner in one or more embodiments.

## Claims

1. A camera image sensor (Q575) comprising:
an I²C interface configured to receive commands from a system-on-chip device according to CSI2 CCI protocol;
a register for storing a training ordered set received via the I²C interface according to CSI2 CCI protocol;
an nPhase D-PHY channel interface configured to transmit, during at least one blanking interval, the stored training ordered set in response to a command received via the I²C interface.

2. A method for a camera image sensor (Q575) having an I²C interface, an nPhase D-PHY channel interface and a register, the method comprising:
receiving a training ordered set via the I²C interface according to CSI2 CCI protocol;
storing the training ordered set in the register;
receiving a command, via the I²C interface, to transmit the stored training ordered set; and
transmitting, via the nPhase D-PHY channel interface, the stored training ordered set during at least one blanking interval.

3. A method according to claim 2, further comprising repeatedly transmitting the training ordered set until a delay lock loop has been achieved.

4. A method for an apparatus comprising an I²C interface and an nPhase D-PHY channel interface, the method comprising:
providing a training ordered set to a camera image sensor (Q575) via the I²C interface according to CSI2 CCI protocol, wherein the training ordered set comprises a predetermined data pattern;
instructing the camera image sensor (Q575) via the I²C interface according to CSI2 CCI protocol to send the training ordered set via an nPhase D-PHY channel;
receiving, via the nPhase D-PHY channel interface, a data pattern during a blanking interval from an nPhase D-PHY channel interface of the camera image sensor; and
calibrating the nPhase D-PHY channel based on a comparison of the received data pattern and the predetermined data pattern.

5. The method of claim 4, wherein calibrating the nPhase D-PHY channel further comprises achieving a delay lock loop, DLL, lock.

6. The method of claim 5, wherein instructing the camera image sensor (Q575) to send the training ordered set comprises instructing the camera image sensor (Q575) to repeatedly send the training ordered set until the DLL lock has been achieved.

7. An apparatus (100), comprising:
an I²C interface;
an nPhase D-PHY channel interface; and
control logic configured to:
send a predetermined data pattern to a camera sensor (Q575) via the I²C interface according to CSI2 CCI protocol;
instruct the camera sensor (Q575) via the I²C interface to send the predetermined data pattern via an nPhase D-PHY channel;
receive, via the nPhase D-PHY channel interface, a data pattern sent via the nPhase D-PHY channel;
determine whether the received data pattern matches the predetermined data pattern; and
calibrate the nPhase D-PHY channel based on the determination of whether the received data pattern matches the predetermined data pattern.

8. The apparatus (100) of claim 7, wherein calibrating the nPhase D-PHY channel comprises determining a delay value to achieve a delay lock loop lock by the interface for the nPhase D-PHY channel.

## Patentansprüche

1. Kamerabildsensor (Q575), der Folgendes umfasst:
eine I²C-Schnittstelle, die dafür konfiguriert ist, Befehle von einer System-on-Chip-Einrichtung gemäß dem CSI2-CCI-Protokoll zu empfangen,
ein Register zum Speichern einer über die I²C-Schnittstelle gemäß dem CSI2-CCI-Protokoll empfangenen geordneten Lernmenge,
eine Schnittstelle für n-phasige D-PHY-Kanäle, die dafür konfiguriert ist, in Reaktion auf einen über die I²C-Schnittstelle empfangenen Befehl während mindestens einer Austastlücke die gespeicherte geordnete Lernmenge zu übertragen.

2. Verfahren für einen Kamerabildsensor (Q575) mit einer I²C-Schnittstelle, einer Schnittstelle für n-phasige D-PHY-Kanäle und einem Register, wobei das Verfahren Folgendes umfasst:
Empfangen einer geordneten Lernmenge über die I²C-Schnittstelle gemäß dem CSI2-CCI-Protokoll,
Speichern der geordneten Lernmenge im Register,
über die I²C-Schnittstelle erfolgendes Empfangen eines Befehls zum Übertragen der gespeicherten geordneten Lernmenge und
Übertragen der gespeicherten geordneten Lernmenge über die Schnittstelle für n-phasige D-PHY-Kanäle während mindestens einer Austastlücke.

3. Verfahren nach Anspruch 2, ferner umfassend ein wiederholtes Übertragen der geordneten Lernmenge, bis eine Verzögerungsregelschleife erreicht wurde.

4. Verfahren für eine Vorrichtung, die eine I²C-Schnittstelle und eine Schnittstelle für n-phasige D-PHY-Kanäle umfasst, wobei das Verfahren Folgendes umfasst:
Bereitstellen einer geordneten Lernmenge an einen Kamerabildsensor (Q575) über die I²C-Schnittstelle gemäß dem CSI2-CCI-Protokoll, wobei die geordnete Lernmenge ein vorab bestimmtes Datenmuster umfasst,
Anweisen des Kamerabildsensors (Q575) über die I²C-Schnittstelle gemäß dem CSI2-CCI-Protokoll, die geordnete Lernmenge über einen n-phasigen D-PHY-Kanal zu senden,
Empfangen eines Datenmusters während einer Austastlücke über die Schnittstelle für n-phasige D-PHY-Kanäle von einer Schnittstelle für n-phasige D-PHY-Kanäle des Kamerabildsensors und
Kalibrieren des n-phasigen D-PHY-Kanals auf Grundlage eines Vergleichs des empfangenen Datenmusters und des vorab bestimmten Datenmusters.

5. Verfahren nach Anspruch 4, wobei das Kalibrieren des n-phasigen D-PHY-Kanals ferner ein Erreichen einer Verzögerungsregelschleifen- (DLL-) Regelung umfasst.

6. Verfahren nach Anspruch 5, wobei das Anweisen des Kamerabildsensors (Q575), die geordnete Lernmenge zu senden, ein Anweisen des Kamerabildsensors (Q575) umfasst, die geordnete Lernmenge wiederholt zu senden, bis die DLL-Regelung erreicht wurde.

7. Vorrichtung (100), die Folgendes umfasst:
eine I²C-Schnittstelle,
eine Schnittstelle für n-phasige D-PHY-Kanäle und Steuerlogik, die konfiguriert ist, um:
ein vorab bestimmtes Datenmuster über die I²C-Schnittstelle gemäß dem CSI2-CCI-Protokoll an einen Kamerasensor (Q575) zu senden,
den Kamerasensor (Q575) über die I²C-Schnittstelle anzuweisen, das vorab bestimmte Datenmuster über einen n-phasigen D-PHY-Kanal zu senden,
über die Schnittstelle für n-phasige D-PHY-Kanäle ein über den n-phasigen D-PHY-Kanal gesendetes Datenmuster zu empfangen,
zu bestimmen, ob das empfangene Datenmuster mit dem vorab bestimmten Datenmuster übereinstimmt, und
auf Grundlage der Bestimmung, ob das empfangene Datenmuster mit dem vorab bestimmten Datenmuster übereinstimmt, den n-phasigen D-PHY-Kanal zu kalibrieren.

8. Vorrichtung (100) nach Anspruch 7, wobei das Kalibrieren des n-phasigen D-PHY-Kanals ein Bestimmen eines Verzögerungswerts umfasst, um durch die Schnittstelle für den n-phasigen D-PHY-Kanal eine Verzögerungsregelschleifenregelung zu erreichen.

## Revendications

1. Capteur d'image d'appareil de prise de vues (Q575), comprenant :
une interface I²C configurée pour recevoir des commandes à partir d'un dispositif à système sur puce selon le protocole CSI2 CCI ;
un registre pour stocker un ensemble ordonné d'apprentissage reçu par l'intermédiaire de l'interface I²C selon le protocole CSI2 CCI ;
une interface de canal nPhase D-PHY configurée pour transmettre, durant au moins un intervalle de suppression, l'ensemble ordonné d'apprentissage stocké en réponse à une commande reçue par l'intermédiaire de l'interface I²C.

2. Procédé pour un capteur d'image d'appareil de prise de vues (Q575) possédant une interface I²C, une interface de canal nPhase D-PHY et un registre, le procédé comprenant :
la réception d'un ensemble ordonné d'apprentissage par l'intermédiaire de l'interface I²C selon le protocole CSI2 CCI ;
le stockage de l'ensemble ordonné d'apprentissage dans le registre ;
la réception d'une commande, par l'intermédiaire de l'interface I²C, pour transmettre l'ensemble ordonné d'apprentissage stocké ; et
la transmission, par l'intermédiaire de l'interface de canal nPhase D-PHY, de l'ensemble ordonné d'apprentissage stocké durant au moins un intervalle de suppression.

3. Procédé selon la revendication 2, comprenant en outre la transmission répétée de l'ensemble ordonné d'apprentissage jusqu'à ce qu'une boucle à verrouillage de retard ait été atteinte.

4. Procédé pour un appareil comprenant une interface I²C et une interface de canal nPhase D-PHY, le procédé comprenant :
la fourniture d'un ensemble ordonné d'apprentissage à un capteur d'image d'appareil de prise de vues (Q575) par l'intermédiaire de l'interface I²C selon le protocole CSI2 CCI, dans lequel l'ensemble ordonné d'apprentissage comprend un motif de données prédéterminé ;
l'instruction au capteur d'image d'appareil de prise de vues (Q575) par l'intermédiaire de l'interface I²C selon le protocole CSI2 CCI d'envoyer l'ensemble ordonné d'apprentissage par l'intermédiaire d'un canal nPhase D-PHY ;
la réception, par l'intermédiaire de l'interface de canal nPhase D-PHY, d'un motif de données durant un intervalle de suppression à partir d'une interface de canal nPhase D-PHY du capteur d'image d'appareil de prise de vues ; et
l'étalonnage du canal nPhase D-PHY sur la base d'une comparaison du motif de données reçu et du motif de données prédéterminé.

5. Procédé selon la revendication 4, dans lequel l'étalonnage du canal nPhase D-PHY comprend en outre l'atteinte d'un verrouillage de boucle à verrouillage de retard, DLL.

6. Procédé selon la revendication 5, dans lequel l'instruction au capteur d'image d'appareil de prise de vues (Q575) d'envoyer l'ensemble ordonné d'apprentissage comprend l'instruction au capteur d'image d'appareil de prise de vues (Q575) d'envoyer de façon répétée l'ensemble ordonné d'apprentissage jusqu'à ce que le verrouillage de DLL ait été atteint.

7. Appareil (100), comprenant :
une interface I²C ;
une interface de canal nPhase D-PHY ; et
une logique de commande configurée pour :
envoyer un motif de données prédéterminé à un capteur d'appareil de prise de vues (Q575) par l'intermédiaire de l'interface I²C selon le protocole CSI2 CCI ;
donner l'instruction au capteur d'appareil de prise de vues (Q575), par l'intermédiaire de l'interface I²C, d'envoyer le motif de données prédéterminé par l'intermédiaire d'un canal nPhase D-PHY ;
recevoir, par l'intermédiaire de l'interface de canal nPhase D-PHY, un motif de données envoyé par l'intermédiaire du canal nPhase D-PHY ;
déterminer si le motif de données reçu correspond au motif de données prédéterminé ; et
calibrer le canal nPhase D-PHY sur la base de la détermination du fait que le motif de données reçu correspond ou non au motif de données prédéterminé.

8. Appareil (100) selon la revendication 7, dans lequel l'étalonnage du canal nPhase D-PHY comprend la détermination d'une valeur de retard pour atteindre un verrouillage de boucle à verrouillage de retard par l'interface pour le canal nPhase D-PHY.
